# EUROPEAN PATENT SPECIFICATION

(11) **EP 2 681 945 B1**
(45) Date of publication and mention of the grant of the patent: **06.12.2017**
(21) Application number: 11859835.8
(22) Date of filing: 28.02.2011
(51) Int. Cl.: H04W 76/04, H04W 36/22, H04W 52/02, H04W 88/08, H04B 1/44, H04W 16/08

(54) **APPARATUS AND METHOD FOR SAVING POWER OF BASE STATIONS**
VORRICHTUNG UND VERFAHREN ZUM ENERGIESPAREN IN BASISSTATIONEN
APPAREIL ET PROCÉDÉ D'ÉCONOMIE D'ÉNERGIE DE STATIONS DE BASE

(43) Date of publication of application: 08.01.2014
(73) Proprietor: Telefonaktiebolaget LM Ericsson (publ), 164 83 Stockholm (SE)
(72) Inventor: LI, Mingxin, Beijing 100055 (CN); LIU, Weihong, Beijing 102218 (CN)
(74) Representative: Ericsson
(86) International application number: PCT/CN2011/000321
(87) International publication number: WO 2012/116467

(56) References cited:
- WO-A1-2009/123423
- CN-A- 101 742 516
- CN-A- 101 841 859
- US-A1- 2004 121 809
- US-A1- 2005 245 202
- US-B1- 6 584 330

## Description

### TECHNICAL FIELD

The present invention generally relates to saving power of base stations, particularly to a method for status management of base stations in a communication network and a device for implementing the method.

### BACKGROUND

With the rapid expansion of mobile communication networks, operators are becoming increasingly aware of their energy bills. A China Mobile's operation and maintenance expenditure report shows that in 2007 the electricity expenditures amount to 10 billion US Dollar, accounting for over a half of the operation and maintenance cost. More operators are putting greater demands on energy usage. At the same time, saving energy is good for the environment in reducing CO₂ emissions and preventing global warming.

Among the network elements, base station is the single largest consumer of energy. Therefore it is significant to reduce power consuming of base stations.

Currently, the power saving technologies for base stations can be mainly classed into two types, i.e. the power saving technology of air conditions and environments and the power saving technology of carrier frequency level power amplifier.

The power saving technology of air conditions and environments is discussed e.g. by Xie DF, Ge J, etc. "Intelligent heat exchangers and air-conditioning system built green base station solution and practice. ZTE In: Information Communication Technology, 2009, 04:39-43", which introduces the energy-saving cooling solutions and the effect of the green base station based on the analysis of the reason of consuming more power and the change of temperature inside and outside the station.

The power saving technology of carrier frequency level power amplifier is discussed e.g. in US7787566B2, which relates to a method and apparatus for improving power amplifier efficiency in wireless communication systems having variable transmit power in a large range and/or high peak to average power rations.

A method and system for reducing power consumption of a wireless transmit/receive unit (WTRU), (i.e., mobile station), are disclosed in US7733835B2. It designs a sleeping message frame and describes the process sending sleeping message frame.

US7769414B2 relates to a system and method for controlling a power saving mode of a subscriber station in a wireless portable network system. More, specifically, it relates to a system and method for managing a sleep mode in a unified manner and reducing power by grouping and controlling a sleep operation, a listening operation, and controlling a sleep operation, a listening operation, and an awaken operation for saving power of a subscriber station in a wireless portable network.

Although it has been proposed to use sleep mode to save power consumption, it is not disclosed how to use the sleep mode, especially for a group of base stations. Furthermore, the energy efficiency for the base stations is still not enough. In addition, making some of base stations enter the sleep mode might case some problems, e.g. the coverage areas of the communication network are reduced and mobile terminals might have difficulty in accessing the network or suffer from a high call loss/service quality deterioration.

US 6584330 discloses a method of adaptive power management for a node in a cellular telecommunication system. It is primarily focused on the traffic through a single base station and adaptation in response to that traffic, such as powering down one or more amplifiers, and putting carriers, circuits and sectors into sleep mode. US 2005/245202 discloses a radio front-end with two antenna switches operatively connected to separate antennas. US2004/121809 discloses a method of correlating the magnitude of the interference between multiple antenna paths.

### SUMMARY

Therefore, it is an object to solve at least one of the above-mentioned problems.

According to one aspect of the invention, a method for status management of base stations in a communication network is provided. The method comprises measuring overall traffic load of the base stations and transferring at least one the base stations from an awaken mode to a sleep mode based on the measurement. The method further comprises, for all antennas connected to the at least one base station transferred to sleep mode, adjusting the connection of the antennas such that: paths between the at least one base station to be transferred to sleep mode and the antennas are disconnected; and paths are connected between the antennas and at least one base station in awaken mode.

The step of transferring at least one of the base stations from an awaken mode to a sleep mode based on a measurement may comprise comparing the overall traffic load with a first threshold and transferring a first number of the base stations from the awaken mode to the sleep mode if the overall traffic load is lower than the first threshold.

The step of transferring at least one of the base stations from an awaken Mode to a sleep mode based on the measurement may further comprise comparing the overall traffic load with a second threshold lower than the first threshold and transferring a second number of the base stations from the awaken mode to the sleep mode if the overall traffic load is lower than the second threshold, wherein the second number is greater than the first number.

The method may further comprise switching the traffic on the base stations which are to be transferred to the sleep mode to other base stations in the awaken mode. The method may further comprises controlling connection relation between the base stations and antennas such that all antennas are connected to base stations in the awaken mode.

According to another aspect of the invention, a device for status management of base stations in a communication network is provided. The device comprises a first module arranged to measure overall traffic load of the base stations and a second module arranged to transfer at least one of the base stations from an awaken mode to a sleep mode based on measurement of overall traffic load of the base stations. The device further comprises a fourth module arranged to adjust, for all antennas connected to the at least one base station transferred to sleep mode, the connection of the antennas such that: paths between the at least one base station to be transferred to sleep mode and the antennas are disconnected; and paths are connected between the antennas and at least one base station in awaken mode.

The second module may be further arranged to compare the overall traffic load with a second threshold lower than the first threshold and transfer a second number of the base stations from the awaken mode to the sleep mode if the overall traffic load is lower than the second threshold, wherein the second number is greater than the first number.

The status management device may further comprise a third module arranged to switch the traffic on the base stations which are to be transferred to the sleep mode to other base stations in the awaken mode. The status management device may further comprise a fourth module arranged to control connection relation between the base stations and antennas such that all antennas are connected to base stations in the awaken modes,

According to a further aspect of the invention, a connection adjustor for adjusting connection relation between antennas and base stations is provided. The connection adjustor comprises a variable attenuator module including a plurality of variable attenuators on paths of RF signals between the antennas and the base stations. It further comprises an attenuator range control module arranged to adjusting ranges of plurality of variable attenuators based on a control signal indicating at least one of the base stations transferring from an awaken mode to a sleep mode.

The connection adjustor may further comprise a control circuit module arranged to interpret a control signal indicating at least one of the base stations transferring from an awaken mode to a sleep mode into a format understandable to the attenuator range control module.

The attenuator range control module may be further arranged to adjust the plurality of variable attenuators to the extent that the paths between the at least one base stations and their corresponding antennas are disconnected and the paths between awaken base stations and all antennas are connected. The attenuator range control module may be further arranged to adjust the plurality of variable attenuators to the extent that a handover from at least one base stations to awaken base stations is triggered. The connection adjustor may further comprise a bidirectional amplifier for amplifying the RF signals.

### BRIEF DESCRIPTION OF THE DRAWINGS

The invention, together with further objects and advantages thereof, will be best understood by reference to the following description taken together with the accompanying drawings, in which:
Fig. 1 is a schematic system view of a communication network;
Fig. 2 is a flow chart illustrates a method for status management of base stations in a communication network in accordance with an embodiment of the invention;
Fig. 3 is a schematic block diagram of a status management device in accordance with an embodiment of the invention;
Fig. 4 is a schematic block diagram of a connection adjustor for adjusting connection relation between antennas and the base stations in accordance with an embodiment of the invention; and
Fig. 5 is a schematic system view of the communication network in accordance with an embodiment of the invention.

### DETAILED DESCRIPTION

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The present invention is described below with reference to block diagrams and/or flowchart illustrations of methods, apparatus, networks (systems) and/or computer program products according to embodiments of the invention. It is understood that several blocks of the block diagrams and/or flowchart illustrations, and combinations of blocks in the block diagrams and/or flowchart illustrations, can be implemented by computer program instructions. These computer program instructions may be provided to a processor of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

Accordingly, the present invention may be embodied in hardware and/or in software (including firmware, resident software, micro-code, etc.). Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

The invention will be described below with reference to the drawings.

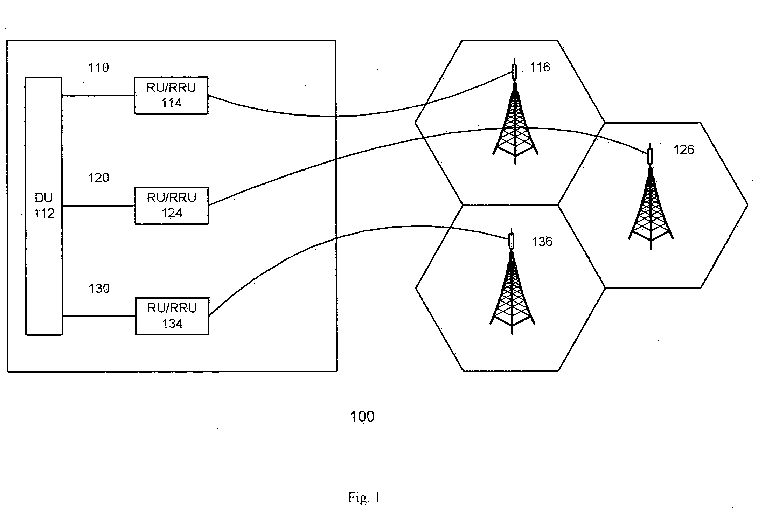

Fig. 1 is a schematic system view of a communication network.

As shown in Fig. 1, the communication network 100 includes three base stations 110, 120 and 130. Each of the base stations includes a Digital Unit (DU) 112 and a Radio Unit (RU)/Remote Radio Unit (RRU) 114, 124 and 134. Each of the RU/RRUs 114, 124 and 134 is connected to a corresponding antenna 116, 126 and 136. Although the DU 112 is shown to be shared by the three RU/RRUs 114, 124 and 134, it is possible to separately deploy a DU for each RU/RRU. In the description hereinbelow, a combination of a DU and a RU/RRU is called a base station. Other network elements are not shown for purpose of simplicity and clarity.

According to one aspect of the invention, the inventor considers the conditions that may trigger the transfer of base stations from an awaken mode to a sleep mode. Traffic load on some of the base stations may be relatively low during idle time such as midnight, and it is reasonable to transfer them to the sleep mode to save power. In the description, the awaken mode indicates an operating status where all or most of components of the base station is working and the base station is able to provide traffic service to mobile stations, and the sleep mode indicates an energy-saving status where most of the components of the base station is powered off and the base station is not able to provide traffic service to mobile stations. However, it should be noted that the base station in the sleep mode should at least have the capability to be woken up. Also, it is possible that the base station in the awaken mode adopts some energy-saving technology, e.g. the base station may enter a status where it transmits pilot signals in a reduced power level/rate, but it still should be considered as in the awaken mode as long as it can provide service to mobile stations.

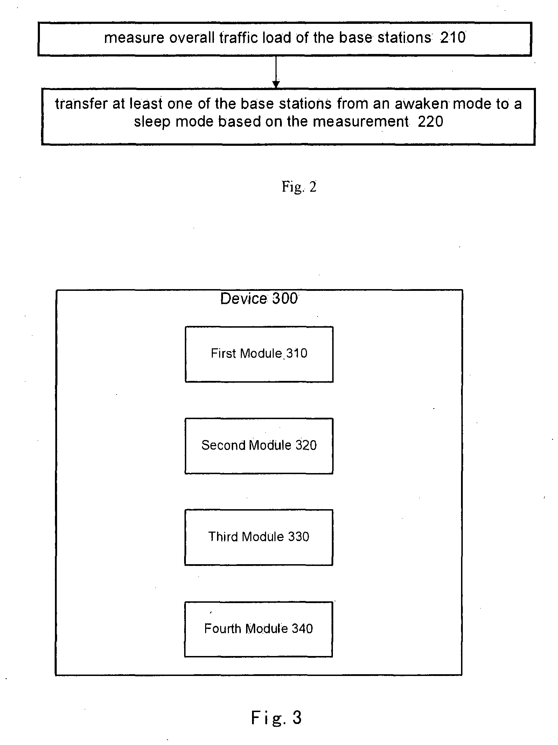

Fig. 2 is a flow chart illustrates a method for status management of base stations in a communication network in accordance with an embodiment of the invention. The method can be performed by a status management device which may be part of DU, or part of other devices or subsystems like Operation Sub-System (OSS), or be a separate device.

Suppose the base stations 110-130 are operating in an awaken mode. In step 210, the overall traffic load of three base stations 110-130 is measured by the status management device. In step 220, at least one of the base stations are transferred by the status management device from the awaken mode to the sleep mode based on the measurement. For example, the overall traffic load is compared with a first threshold. A first number of the base stations are transferred from the awaken mode to the sleep mode if the overall traffic load is lower than the first threshold. For example, if the overall traffic is lower than 60% of the maximum traffic load in the system, one of the base stations (suppose base station 110) may be transferred to the sleep mode. Optionally, a further comparison with a second threshold which is lower than the first threshold may be performed. For example, if the overall traffic is lower than 20% of the maximum traffic load in the system, two of the base stations (suppose base stations 110 and 130) may be transferred to the sleep mode. It should be noted that in determining which one or two of the base stations are to be transferred, various factors of the respective base stations may be considered, such as traffic load, capacity, power consumption and traffic priority/importance. For example, a base station with a lowest traffic load is preferably to be transferred to the sleep mode so that the traffic that needs to be switched to other base stations is minimized. A base station with a capacity to accommodate high traffic load is preferably not to enter the sleep mode but ready to receive potential traffic from other base stations transferred to the sleep mode. A base station which has a high power consumption or less important traffic is more likely to enter the sleep mode. It is possible to use more thresholds to achieve finer-grained status management of the base stations.

By considering the overall traffic load of the base stations, it is possible to manage the status transfer of the base stations with improved energy efficiency and less impact to the service to users.

In an embodiment, the traffic on the base stations which are to be transferred to the sleep mode can be switched to other base stations in the awaken mode. The status management device may send to the DU 112 a control signal indicating which base stations are going to be transferred to the sleep mode to trigger the switching. For example, the traffic on the base stations 110 and 130 which are to enter the sleep mode is switched to the base station 120. The procedure of switching the traffic is similar to that of handover. In determining to which base stations the traffic are to be switched, various factors may be considered, such as traffic load, capacity, power consumption and traffic priority/importance. By switching the traffic of users smoothly to the awaken base stations, the traffic/call drop occurred in the base stations which are going to enter the sleep mode may be avoided.

In conventional solutions, if a base station enters the sleep mode, then its corresponding antenna will be disconnected from the base station. For example, the base station 110 which is going to sleep will be disconnected from the antenna 116. In this case, a mobile station located in the coverage area of the base station 110 might have difficulty in accessing the communication network or suffer from a high call loss/service quality deterioration.

It is therefore further proposed by an aspect of the invention to control the connection relation between the base stations and antennas. In the above example, once the traffic is successfully switched from the base stations 110 and 130 to the base station 120, e.g. a confirmation indicating the success of switching is returned from the DU 112, the status management device may control the connection relation between base stations and antennas such that all antennas are connected to base stations in the awaken mode. For example, the status management device can send a control signal indicating which base stations are going to be transferred to the sleep mode to some device like a connection controller to adjust the connection of antennas such that the paths between the base stations which are to be transferred to the sleep mode and their corresponding antennas are disconnected, and the paths between the base stations in the awaken mode and all the antennas are connected. In the above example, the paths between the base station 110 and antenna 116 and between the base station 130 and antenna 136 are disconnected. As a result, all the antennas 116, 126 and 136 are connected to the awaken base station 120, in other words, no antennas are connected to the base stations 110 and 130 which are to be transferred to the sleep mode. In this way, the areas used to be covered by the based stations 110, 120 and 130 are now covered by the awaken base station 120 via three antennas. Mobile terminals in the areas covered by the base stations 110 and 130 can still access the network and their service will not be impacted, even the base stations 110 and 130 has entered the sleep mode.

Fig. 3 is a schematic block diagram of a status management device in accordance with an embodiment of the invention.

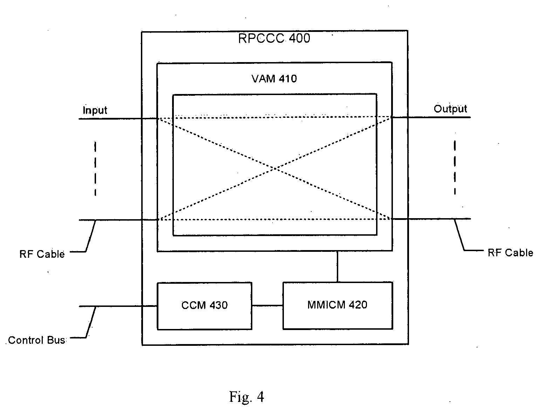

As shown in Fig. 3, the status management device 300 includes a first module 310 for measuring overall traffic load of the base stations and a second module 320 for transferring at least one of the base stations from an awaken mode to a sleep mode based on measurement of overall traffic load of the base stations. The second module 320 may compare the overall traffic load with a first threshold, and transfer a first number of the base stations from the awaken mode to the sleep mode if the overall traffic load is lower than the first threshold. The second module may further compare the overall traffic load with a second threshold lower than the first threshold; and transfer a second number of the base stations from the awaken mode to the sleep mode if the overall traffic load is lower than the second threshold. The second number is greater than the first number. The device 300 may further include a third module 330 for switching the traffic on the base stations which are to be transferred to the sleep mode to other base stations in the awaken mode. The device 300 may further include a fourth module 340 for control the connection relation between the base stations and antennas such that all antennas are connected to base stations in the awaken mode. In particular, the fourth module 340 may control the connection relation between the base stations and antennas by sending a control signal to a connection adjustor as will be described with reference Fig. 4.

Fig. 4 is a schematic block diagram of a connection adjustor for adjusting connection relation between the antennas and base stations in accordance with an embodiment of the invention.

The connection adjustor may be implemented as a device separate from the status management device 300 and controlled by the fourth module 340 to adjust the connection relation between antennas and base stations, or integrated as a part of the fourth module 340. In the embodiment, the connection adjustor is a RF Path Cross Connection Controller (RPCCC) 400 located between the base stations and antennas. From the view of the system, it is like a black box which gets input signals from base stations and outputs signals to antennas. The RPCCC doesn't distinguish Tx and Rx. Therefore it can be used in various communication systems such as Global System for Mobile communications (GSM), Wideband Code Division Multiple Access (WCDMA) and Long Term Evolution (LTE) (Frequency from 800 MHz to 2.4 GHz) without the need to modify the systems.

As shown in Fig. 4, the RPCCC 400 may include a Variable Attenuator Module (VAM) 410 which includes a plurality of variable attenuators on paths of RF signals between the antennas and base stations. The RF signals on RF cables as input from the base stations are attenuated by the variable attenuators and output to the antennas. The RPCCC 400 may further include an attenuator range control module, for example a Monolithic Microwave Integration Circuit Module (MMICM) 420, which is arranged to adjusting ranges of the plurality of variable attenuators based on a control signal indicating at least one of the base stations transferring from an awaken mode to a sleep mode. The RPCCC 400 may further include a control circuit module (CCM) 430 which is arranged to interpret the control signal into a format understandable to the MMICM 420. In the above example, if the RPCCC 400 receives from the status management device 300 over a control bus a control signal indicating the base stations 110 and 130 are going to be transferred to the sleep mode, the CCM 430 interprets the control signal into a format understandable to the MMICM 420, based on which format the MMICM 420 adjusts the ranges of the variable attenuators in the VAM 410 and in turn the connection relation between the base stations and antennas. It should be understood that the three modules could be integrated as one or two modules, although illustrated as three separate modules. For example, the CCM 430 may be integrated into the MMICM 420 and the later may be further integrated with the VAM 410.

In another embodiment, the RPCCC 400 may further include a Bidirectional Signal Amplifier Module (BSAM) (not shown) for amplifying downlink signals output from the VAM 410 and uplink signals input into the VAM 410. In some scenarios of outdoor or long connecting RF cables, the BSAM can make up the insert loss of cables.

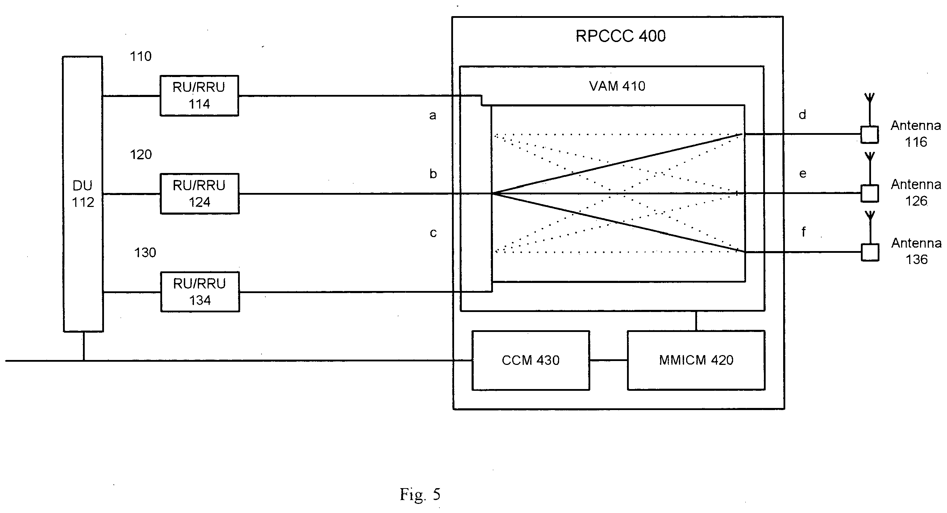

Fig. 5 is a schematic system view of the communication network in accordance with an embodiment of the invention.

As shown in Fig. 5, the RPCCC 400 adjusts the connection relation between antennas and base stations. In the above example in which the base stations 110 and 130 are going to be transferred to the sleep mode, the RPCCC 400, more specifically, the MMICM 420, adjusts variable attenuators on the paths between the base station 110 and the antenna 116 (a↔d) and on the path between the base station 130 and the antenna 136 (c↔f) so that signals input to these paths are seriously attenuated to the extent that the paths a↔d and c↔f are disconnected/almost disconnected. Meanwhile, the RPCCC 400 adjusts variable attenuators on the paths between the awaken base station 120 and the antennas 116 (b↔d) and 136 (b↔f) to make these paths connected. As a result, the awaken base station 120 is connected to all the three antennas 116, 126 and 136 via the paths b↔d, b↔e and b↔f and communicates with mobile stations in areas covered by the three antennas.

Generally, if a base station takes over traffic of two or three base stations in idle time without increasing transmitting power, it will arise a signal strength fading of 3∼4.8 dB. This will not substantially impact the communication with mobile terminals, considering the fact that there is less interference in the idle time and the engineering allowed margin of cell edge is about 5∼10 dB. In some scenarios of outdoor or long connecting RF cable, the BSAM may be used to make up the insert loss of cable as discussed above.

By controlling the connection relation between antennas and base stations, mobile terminals in the areas covered by the base stations which are going to sleep can still access the network. Therefore, energy saving in base stations will not compromise service quality.

In the above embodiment, it is preferable that traffic on the base stations which are going to sleep is switched to the awaken base station(s) before the connection relation are changed, in order to avoid traffic/call drop. In an alternative embodiment, the variable attenuators on the paths between the base station 110 and the antenna 116 (a↔d) and on the path between the base station 130 and the antenna 136 (c↔f) are not adjusted to the extent that paths a↔d and c↔f are disconnected/almost disconnected. Instead, the attenuation ranges on paths a↔d and c↔f are gradually increased. When the RF signals on these paths are attenuated to be weaker than the the RF signal on the path between the awaken base station 120 and antenna 126, a handover will be triggered automatically and then the traffic on base stations 110 and 130 will be switched to the awaken base station 120.

Generally the broadcast channel power waste of LTE, GSM and WCDMA is about 250W, 180W, 800W, and traffic channel power waste is about 200W. Assume there are 6 RUs and 1 DU, i.e. 6 base stations in the network. If the traffic is less than 20%, only 2 base stations will be awake, and about 400W will be saved. If traffic is less than 60% and greater than 20%, 4 base stations will be awake, and about 200W will be saved. Assuming the hours for traffic load less than 20%, greater than 20% and less than 60%, and greater than 60% are 8, 10, and 6 per day respectively, about 30% power will be saved for WCDMA.

In the above description, the specific terms such as base station, RU/RRU, DU are used herein, but it should be understood that other terms may be used in different standards or protocols to refer to the same or like entities. It should be also understood that the invention may be applied to various scenarios including indoors and outdoors. The antenna may be directional or omni antenna. In addition, although not discussed in detail, those skilled in the art may readily conceive from the teaching the procedure of transferring the base stations from the sleep mode to the awaken mode.

While the preferred embodiments of the present invention have been illustrated and described, it will be understood by those skilled in the art that various changes and modifications may be made, and equivalents may be substituted for elements thereof without departing from the scope of the present invention. In addition, many modifications may be made to adapt to a particular situation and the teaching of the present invention without departing from its central scope. Therefore it is intended that the present invention not be limited to the particular embodiment disclosed as the best mode contemplated for carrying out the present invention, but that the present invention include all embodiments falling within the scope of the appended claims.

## Claims

1. A method for status management of base stations in a communication network, comprising the steps of:
measuring (210) overall traffic load of the base stations; and
transferring (220) at least one of the base stations from an awaken mode to a sleep mode based on the measurement,
**characterised in that** the method further comprises:
for all antennas connected to the at least one base station transferred to sleep mode, adjusting the connection of the antennas such that:
paths between the at least one base station to be transferred to sleep mode and the antennas are disconnected; and
paths are connected between the antennas and at least one base station in awaken mode.

2. The method of claim 1, wherein the steps of transferring at least one of the base stations from an awaken mode to a sleep mode based on the measurement comprises:
comparing the overall traffic load with a first threshold; and
transferring a first number of the base stations from the awaken mode to the sleep mode if the overall traffic load is lower than the first threshold.

3. The method of claim 2, wherein the step of transferring at least one of the base stations from an awaken mode to a sleep mode based on the measurement further comprises:
comparing the overall traffic load with a second threshold, wherein the second threshold is lower than the first threshold; and
transferring a second number of the base stations from the awaken mode to the sleep mode if the overall traffic load is lower than the second threshold, wherein the second number is greater than the first number.

4. The method of any one of claims 1-3, further comprising: switching the traffic on the base stations which are to be transferred to the sleep mode to other base stations in the awaken mode.

5. A device for status management of base stations in a communication network, comprising:
a first module (310) arranged to measure overall traffic load of the base stations;
a second module (320) arranged to transfer at least one of the base stations from an awaken mode to a sleep mode based on measurement of overall traffic load of the base stations,
wherein the device further comprises:
a fourth module (340) arranged to adjust, for all antennas connected to the at least one base station transferred to sleep mode, the connection of the antennas such that: paths between the at least one base station to be transferred to sleep mode and the antennas are disconnected; and paths are connected between the antennas and at least one base station in awaken mode.

6. The device of claim 5, wherein the second module is arranged to
compare the overall traffic load with a first threshold; and transfer a first number of the base stations from the awaken mode to the sleep mode if the overall traffic load is lower than the first threshold.

7. The device of claim 6, wherein the second module is further arranged to:
compare the overall traffic load with a second threshold, wherein the second threshold is lower than the first threshold; and
transfer a second number of the base stations from the awaken mode to the sleep mode if the overall traffic load is lower than the second threshold, wherein the second number is greater than the first number.

8. The device of any one of claims 5 to 7, further comprising:
a third module arranged to switch the traffic on the base stations which are to be transferred to the sleep mode to other base stations in the awaken mode.

## Patentansprüche

1. Verfahren zur Statusverwaltung von Basisstationen in einem Kommunikationsnetzwerk, umfassend die folgenden Schritte:
Messen (210) einer Gesamtverkehrslast der Basisstationen; und
Überführen (220) mindestens einer der Basisstationen aus einem Wachzustand in einen Schlafzustand basierend auf der Messung,
**dadurch gekennzeichnet, dass** das Verfahren ferner umfasst:
Anpassen für alle Antennen, die mit der mindestens einen Basisstation verbunden sind, die in den Schlafmodus überführt wird, der Verbindung der Antennen derart, dass:
Pfade zwischen der mindestens einen Basisstation, die in den Schlafmodus überführt werden soll, und den Antennen getrennt werden; und
Pfade zwischen den Antennen und mindestens einer Basisstation im Wachmodus verbunden werden.

2. Verfahren nach Anspruch 1, wobei der Schritt des Überführens mindestens einer der Basisstationen aus einem Wachzustand in einen Schlafzustand basierend auf der Messung umfasst:
Vergleichen der Gesamtverkehrslast mit einer ersten Schwelle; und
Überführen einer ersten Anzahl der Basisstationen aus dem Wachzustand in den Schlafzustand, wenn die Gesamtverkehrslast niedriger als die erste Schwelle ist.

3. Verfahren nach Anspruch 2, wobei der Schritt des Überführens mindestens einer der Basisstationen aus einem Wachzustand in einen Schlafzustand basierend auf der Messung ferner umfasst:
Vergleichen der Gesamtverkehrslast mit einer zweiten Schwelle, wobei die zweite Schwelle niedriger als die erste Schwelle ist; und
Überführen einer zweiten Anzahl der Basisstationen aus dem Wachzustand in den Schlafzustand, wenn die Gesamtverkehrslast niedriger als die zweite Schwelle ist, wobei die zweite Anzahl größer als die erste Anzahl ist.

4. Verfahren nach einem der Ansprüche 1 bis 3, ferner umfassend:
Umschalten des Verkehrs auf den Basisstationen, die in den Schlafmodus überführt werden sollen, auf andere Basisstationen im Wachzustand.

5. Vorrichtung zur Statusverwaltung von Basisstationen in einem Kommunikationsnetzwerk, umfassend:
ein erstes Modul (310), das zum Messen einer Gesamtverkehrslast der Basisstationen ausgelegt ist;
ein zweites Modul (320), das zum Überführen mindestens einer der Basisstationen aus einem Wachzustand in einen Schlafzustand basierend auf der Messung der Gesamtverkehrslast der Basisstationen ausgelegt ist, wobei die Vorrichtung ferner umfasst:
ein viertes Modul (340), das so ausgelegt ist, dass es für alle Antennen, die mit der mindestens einen Basisstation, die in den Schlafmodus überführt wird, die Verbindung der Antennen derart anpasst, dass: Pfade zwischen der mindestens einen Basisstation, die in den Schlafmodus überführt werden soll, und den Antennen getrennt werden; und Pfade zwischen den Antennen und mindestens einer Basisstation im Wachmodus verbunden werden.

6. Vorrichtung nach Anspruch 5, wobei das zweite Modul ausgelegt ist zum:
Vergleichen der Gesamtverkehrslast mit einer ersten Schwelle und Überführen einer ersten Anzahl der Basisstationen aus dem Wachzustand in den Schlafzustand, wenn die Gesamtverkehrslast niedriger als die erste Schwelle ist.

7. Vorrichtung nach Anspruch 6, wobei das zweite Modul ferner ausgelegt ist zum:
Vergleichen der Gesamtverkehrslast mit einer zweiten Schwelle, wobei die zweite Schwelle niedriger als die erste Schwelle ist; und
Überführen einer zweiten Anzahl der Basisstationen aus dem Wachzustand in den Schlafzustand, wenn die Gesamtverkehrslast niedriger als die zweite Schwelle ist, wobei die zweite Anzahl größer als die erste Anzahl ist.

8. Vorrichtung nach einem der Ansprüche 5 bis 7, ferner umfassend:
ein drittes Modul, das so ausgelegt ist, dass es den Verkehr auf den Basisstationen, die in den Schlafmodus überführt werden sollen, auf andere Basisstationen im Wachzustand umschaltet.

## Revendications

1. Procédé de gestion de statut de stations de base dans un réseau de communication, comprenant les étapes de :
la mesure (210) d'une charge de trafic globale des stations de base ; et
le transfert (220) d'au moins l'une des stations de base d'un mode d'éveil dans un mode de sommeil sur la base de la mesure ;
**caractérisé en ce que** le procédé comprend en outre :
pour toutes les antennes connectées à l'au moins une station de base transférée dans un mode de sommeil, l'ajustement de la connexion des antennes de sorte que :
des voies entre l'au moins une station de base à transférer dans un mode de sommeil et les antennes soient déconnectées ; et
des voies soient connectées entre les antennes et au moins une station de base dans un mode d'éveil.

2. Procédé selon la revendication 1, dans lequel l'étape du transfert d'au moins l'une des stations de base d'un mode d'éveil dans un mode de sommeil sur la base de la mesure comprend :
la comparaison de la charge de trafic globale à un premier seuil ; et
le transfert d'un premier nombre des stations de base du mode d'éveil dans le mode de sommeil si la charge de trafic globale est inférieure au premier seuil.

3. Procédé selon la revendication 2, dans lequel l'étape du transfert d'au moins l'une des stations de base d'un mode d'éveil dans un mode de sommeil sur la base de la mesure comprend en outre :
la comparaison de la charge de trafic globale à un deuxième seuil, dans lequel le deuxième seuil est inférieur au premier seuil ; et
le transfert d'un deuxième nombre des stations de base du mode d'éveil dans le mode de sommeil si la charge de trafic globale est inférieure au deuxième seuil, dans lequel le deuxième nombre est supérieur au premier nombre.

4. Procédé selon l'une quelconque des revendications 1 à 3, comprenant en outre :
la commutation du trafic sur les stations de base qui doivent être transférées dans le mode de sommeil à d'autres stations de base dans le mode d'éveil.

5. Dispositif de gestion de statut de stations de base dans un réseau de communication, comprenant :
un premier module (310) agencé pour effectuer la mesure d'une charge de trafic globale des stations de base ;
un deuxième module (320) agencé pour effectuer le transfert d'au moins l'une des stations de base d'un mode d'éveil dans un mode de sommeil sur la base de la mesure de charge de trafic globale des stations de base,
dans lequel le dispositif comprend en outre :
un quatrième module (340) agencé pour effectuer l'ajustement, pour toutes les antennes connectées à l'au moins une station de base transférée dans un mode de sommeil, de la connexion des antennes de sorte que :
des voies entre l'au moins une station de base à transférer dans un mode de sommeil et les antennes soient déconnectées ; et
des voies soient connectées entre les antennes et au moins une station de base dans un mode d'éveil.

6. Dispositif selon la revendication 5, dans lequel le deuxième module est agencé pour effectuer :
la comparaison de la charge de trafic globale à un premier seuil ; et
le transfert d'un premier nombre des stations de base du mode d'éveil dans le mode de sommeil si la charge de trafic globale est inférieure au premier seuil.

7. Dispositif selon la revendication 6, dans lequel le deuxième module est en outre agencé pour effectuer :
la comparaison de la charge de trafic globale à un deuxième seuil, dans lequel le deuxième seuil est inférieur au premier seuil ; et
le transfert d'un deuxième nombre des stations de base du mode d'éveil dans le mode de sommeil si la charge de trafic globale est inférieure au deuxième seuil, dans lequel le deuxième nombre est supérieur au premier nombre.

8. Dispositif selon l'une quelconque des revendications 5 à 7, comprenant en outre :
un troisième module agencé pour effectuer la commutation du trafic sur les stations de base qui doivent être transférées dans le mode de sommeil à d'autres stations de base dans le mode d'éveil.
